Europäisches Patentamt

**European Patent Office**

Office européen des brevets

(11) Publication number: **0 232 577**
**A1**

# EUROPEAN PATENT APPLICATION

(21) Application number: **86300920.5**

(22) Date of filing: **11.02.86**

(51) Int. Cl.⁴: **B23Q 11/00**

(43) Date of publication of application:
**19.08.87 Bulletin 87/34**

(84) Designated Contracting States:
**AT BE CH DE FR GB IT LI LU NL SE**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**Withers & Rogers 4 Dyer's Buildings Holborn**
**London EC1N 2JT(GB)**

(54) **Machine tool.**

(57) Certain machine tools generate large quantities of airborne debris. Removal of this airborne debris from the vicinity of the tool of the machine tool has been a problem for some time. The invention relates specifically but not exclusively to a motor driven grinding machine having a spindle (101), with a grinding wheel tool (102) mounted there on. A fan (103) is mounted on the spindle (101) adjacent the grinding wheel tool (102) and driven by the same motor, within housings (104) having inlets (105) and outlets (106).

Fig. 1

## MACHINE TOOL

This invention relates to a machine tool and is particularly, but not exclusively, concerned with a machine tool such as a grinder, buffer or circular saw .

Machine tools such as grinders tend to generate large quantities of airborne debris in use. This airborne debris causes several problems. If allowed to accumulate in the work area, it reduces the efficiency of the machine tool. The debris also poses a considerable risk to the health of the operator of the machine tool's. Complaints such as Grinder's Rot caused by the inhalation of airborne debris by the operator are well known. Hitherto attempts at removing the airborne debris have included extractors arranged to exhaust air from the work area. Such extractors have comprised a fan rotatably mounted within a housing, connected by piping to the work area, and driven by an electric motor to suck air and debris from the work area. However, these extractors have all been powered by a motors separate from that which powers the machine tool. The costs of providing and running a separate motor have meant that such systems have not found widespread acceptance, and so the risks to the machine tool operator's health have remained.

It is the object of the invention to provide a solution to the problems caused by the airborne debris generated by machine tools by providing an extractor fan driven by the same motor as that which drives the machine tool.

According to one aspect of the invention there is provided a machine tool having a spindle rotatable by drive means, at least one tool mounted on said spindle and an extractor for extracting airborne debris from the vicinity of the tool characterised in that the extractor comprises a fan operatively connectable to said drive means.

The fan may be rotatably fast with the spindle. The fan may be mounted adjacent said tool. The fan may be positioned between the tool and said drive means, this arrangement being preferable when the tool is frequently changed. Alternatively the tool may be positioned between the fan and said drive means.

The fan may be of the centrifugal-flow type. Alternatively it may be of the axial-flow type. It should be noted that any other suitable type of fan may be used within the scope of the invention. The term "fan" is used herein in a broad sense and includes impellers, turbofans and propellor fans etc.

The fan may be positioned within a housing defining an inlet and an outlet. In use the airborne debris may be exhausted from the work area through the outlet in a direction substantially at right angles to the spindle. Alternatively, the airborne debris may be exhausted from the work area through the outlet in a direction substantially parallel to the spindle.

Preferably the tool is arranged within said housing. In such a case the tool may be accessible to a user through said inlet.

According to another aspect of the invention there is provided an extractor assembly, for extracting airborne debris from the vicinity of a tool of a motor driven machine tool, comprising a fan rotatably mounted within a housing characterized in that the fan is driven by the motor of the machine tool.

Conveniently the outlet may be connected to means for trapping the debris, for instance a filter may be provided for filtering the debris from the air.

The machine tool may include two spindles each equipped with tools, or one central spindle with two tools, the drive means may be between the tools. In either case extractor fans may be provided to exhaust airborne debris from the respective work areas. It is contemplated that the fan, or fans, although driven by the drive means driving the machine tool, may be located away from machine tool and may extract airborne debris from the work area or areas through passageways connecting respective outlets.

The invention is not restricted to any one form of machine tool but may be applied to any suitable machine tool including grinders, buffers, circular saws etc. The term "tool" may include grinding wheels, saws, drills, buffing mops etc. Machine tools in accordance with the invention will now be described, by way of example only, with reference to the following drawings:

Fig. 1 Illustrates in perspective a grinder having twin grinding wheels and extractors with centrifugal-flow fans one of which is shown in exploded form.

Fig. 1-1 and 1-2 Illustrate one of the extractors of the grinder shown in Fig. 1 in cross section and cut away respectively.

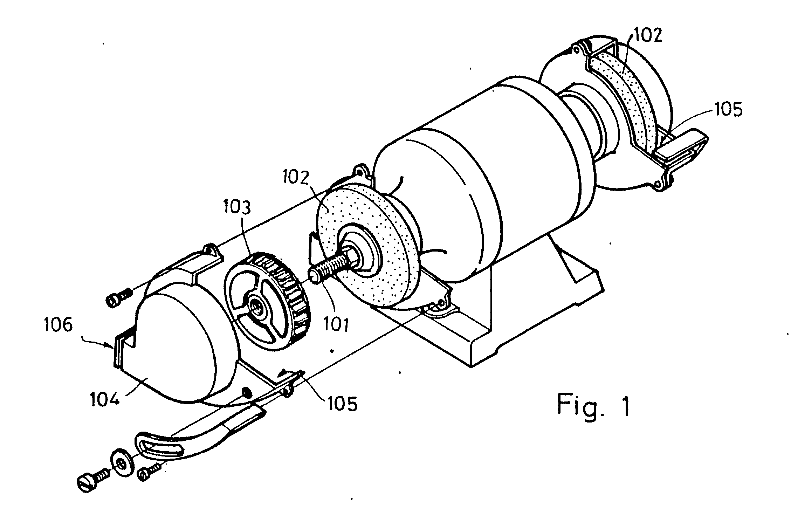

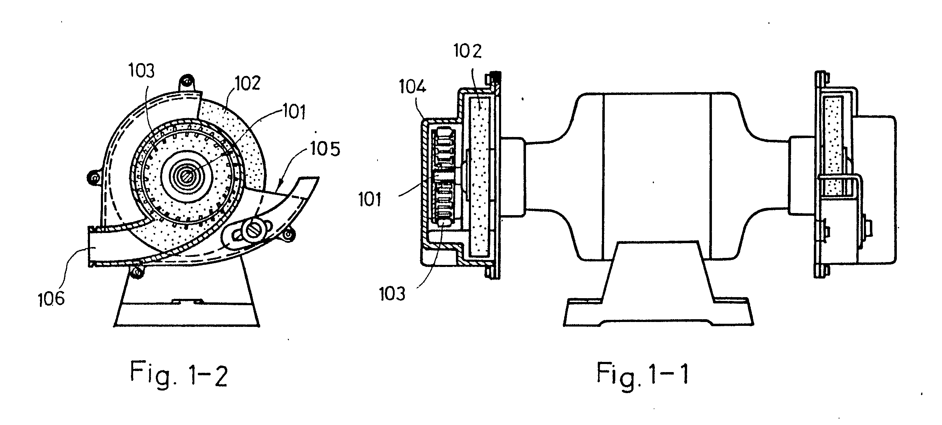

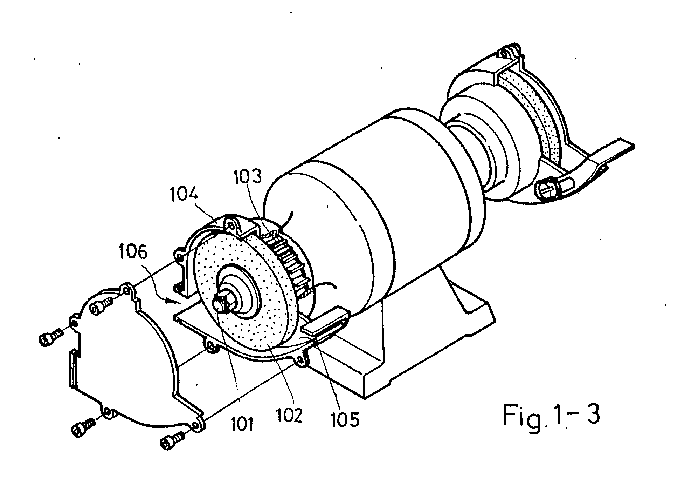

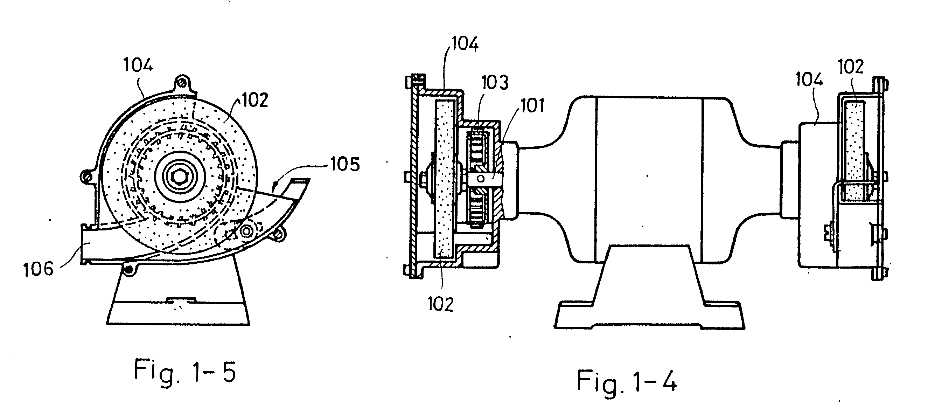

Fig. 1-3 Illustrates a grinder having twin grinding wheels with centrifugal-flow type extractor fans mounted between the grinding wheels and the grinder motor.

Figs. 1-4 and 1-5 Illustrate one of the extractors of the grinder shown in Fig. 1-3 in cross-section and cut-away respectively.

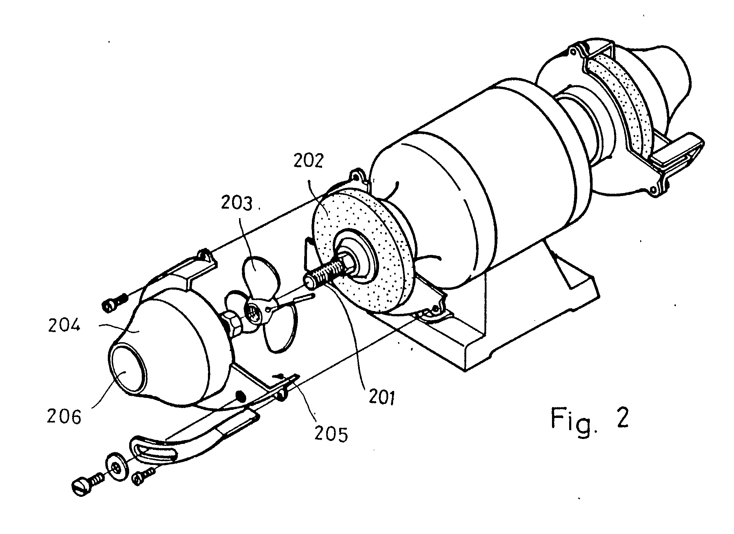

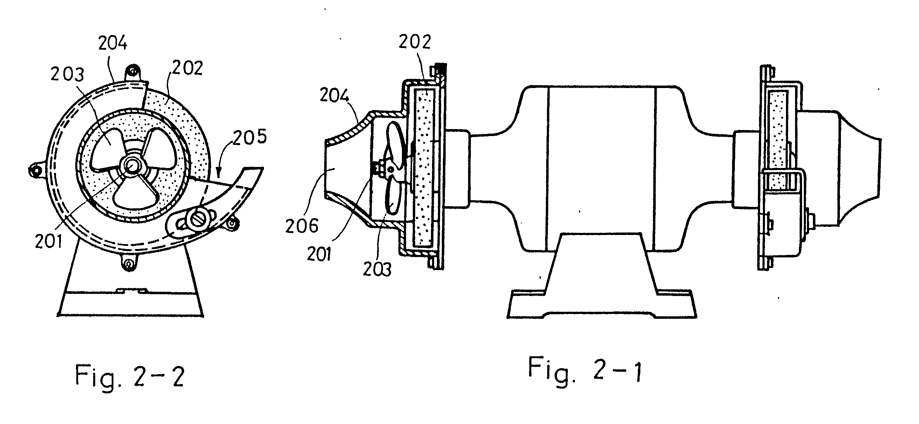

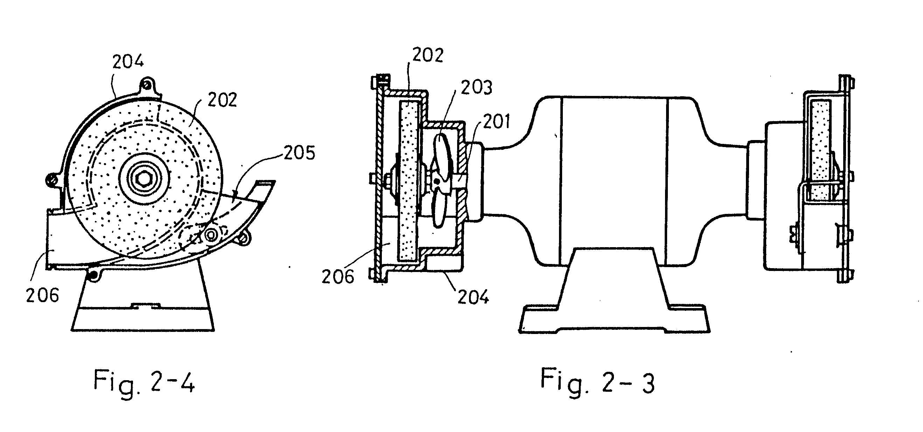

Fig. 2 Illustrates a twin grinding wheel grinder having extractors with axial-flow type fans, one of which is shown in exploded form.

Figs. 2-1 and 2-1 Illustrates one of the extractors of the grinder shown in Fig. 2 in cross-section and cut away respectively.

Figs. 2-3 and 2-4 Illustrate a grinder with similar fans to those shown in Fig. 2. but with the fans between the grinding wheels and the grinder motor.

Fig. 1, 1-1 and 1-2 illustrate a grinder having a centre motor driven spindle 101 to which are bolted two grinding wheels 102. Centrifugal-flow fans 103 (only one of which is shown) are mounted to the spindle 101 coaxial with the grinding wheels. Housing 104 locate about the fans 103 and grinding wheels 102. The housings 104 form inlets 105 and outlets 106 (one of which is shown). The outlets 106 are in use connected by pipes to filters and or storage equipment. In use the grinding wheels 102 and fans 103 rotate rapidly, air and debris from the work area around the grinding wheel being drawn through the inlet 105 by the fan 103, into the housing 104 and expelled via outlet 106 to storage vessels (not shown). The airborne debris is expelled in a direction substantially at right angles to the axis of the spindle.

Fig. 1-3, 1-4, 1-5 illustrate a grinder having similar fans 103 to those shown in Figs. 1, 1-1, 1-2 but with the fans 103 being located between the grinding wheels 102 and the motor of the grinder. This arrangement is preferable when the grinding wheels are often exchanged.

Figs. 2, 2-1, 2-2 illustrates the use of an alternative fan type and housing to that shown in the grinders illustrated in Figs. 1, 1-1, 1-2, 1-3, 1-4, 1-5. The grinder has a central spindle 201 on which are mounted grinding wheels 202. Axial flow fans 203 are mounted on the spindle 201 within housings 204 which define inlets 205 and outlets 206. As in the previously described grinders, in use airborne debris is sucked from the work areas around the grinding wheels 202, through the inlets 205 and expelled via the outlets 206. The outlets 206 are so arranged as to allow the airborne debris to be exhausted from the housing in a direction parallel to the axis of the spindle 201. Similarly the outlet may be connected to storage vessels and filters.

Figs. 2-3 and 2-4 illustrate a grinder having similar fans 203 to those illustrated in Figs. 2, 2-1, 2-2 but with the fans 203 mounted on the spindle 201 inside the grinding wheels 202. This arrangement is preferable when the grinding wheels are changed frequently. The housings 204 differ in that the outlet 206 is arranged to exhaust air from the work area around the grinding wheels in a direction substantially at right angles to the axis of the spindle 201.

## Claims

1. A machine tool having a spindle (101, 201) rotatable by drive means, at least one tool (102, 202) mounted on said spindle (101, 201) and an extractor for extracting airborne debris from the vicinity of the tool characterised in that the extractor comprises a fan (103, 203) operatively connected to said drive means.

2. A machine tool according to claim 1, characterised in that the fan (103, 203) is rotatably fast with the spindle (101, 201).

3. A machine tool according to claims 1 or 2, characterised in that the fan (103, 203) is mounted adjacent said tool (102, 202).

4. A machine tool according to claims 1, 2, or 3, characterised in that the fan (103, 203) is positioned between the tool (102, 202) and said drive means.

5. A machine tool according to claims 1, 2 or 3, characterised in that the tool (102, 202) is positioned between the fan (103, 203) and said drive means.

6. A machine tool according to any preceding claim characterised in that the fan (103) is of the centrifugal flow type.

7. A machine tool according to any of claims 1 to 5, characterised in that the fan (203) is of the axial-flow type.

8. A machine tool according to any preceding claim, characterised in that the fan (103,203) is positioned within a housing (104,204) defining an inlet (105,205) and an outlet (106,206).

9. A machine tool according to Claim 8, characterised in that in use the airborne debris exhausts from the work area through the outlet (106,206) in a direction substantially at right angles to the spindle (101,201).

10. A machine tool according to Claim 8, characterised in that in use the airborne debris exhausts from the work area through the outlet (106,206) in a direction substantially parallel to the spindle (101,201).

11. A machine tool according to any preceding claim characterised in that the tool (102) is a grinding wheel.

12. An extractor assembly for extracting airborne debris from the vicinity of the tool (102,202) of a motor-driven machine tool comprising a fan (103,203) rotatably mounted within a housing (104,204) characterised in that the fan (103,203) is driven by the motor of the machine tool.

Fig. 1

0 232 577

Fig. 1-1

Fig. 1-2

104    103

106

101    102    105

Fig. 1- 3

0 232 577

Fig. 1-4

Fig. 1-5

Fig. 2

Fig. 2-1

Fig. 2-2

Fig. 2-4

Fig. 2-3

0 232 577

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 231 379   (SEEKAMP) | 1-6,8, 9,11, 12 | B 23 Q   11/00 |
| X | DE-A-1 906 684   (VON WOLFF) | 1-4,7 | |
| A | | 10 | |
| X | US-A-1 990 991   (HEUBACH) | 1-4,6, 8,9,11 ,12 | |
| A | | 10 | |
| A | DE-A-2 261 297   (SCHRÖDER) | | |
| A | DE-A-1 453 203   (LENKE) | | TECHNICAL FIELDS SEARCHED (Int. Cl.4) |
| A | DE-C-  960 669   (LUTZ) | | B 23 Q<br>B 24 B<br>B 23 D |
| A | US-A-2 553 924   (LILLQUIST) | | |
| A | US-A-2 379 503   (TEAGER) | | |

The present search report has been drawn up for all claims

| Place of search | Date of completion of the search | Examiner |
|---|---|---|
| THE HAGUE | 22-10-1986 | DE GUSSEM J.L. |